# EUROPÄISCHE PATENTSCHRIFT

(11) **EP 0 905 158 B1**
(45) Veröffentlichungstag und Bekanntmachung des Hinweises auf die Patenterteilung: **01.12.2004**
(21) Anmeldenummer: 98117893.2
(22) Anmeldetag: 22.09.1998
(51) Int. Cl.: C08G 18/36, C08G 18/65, C08J 9/08, C08J 9/14, C08G 18/66

(54) **Lagerstabile Emulsionen zur Herstellung von feinzelligen Hartschaumstoffen auf Isocyanatbasis**
Storage-stable emulsions for the preparation of fine-celled rigid foams based on isocyanate
Emulsions stables au stockage pour la préparation de mousses rigides à cellules fines à base d'isocyanate

(30) Priorität: 24.09.1997 DE 19742010
(43) Veröffentlichungstag der Anmeldung: 31.03.1999
(73) Patentinhaber: BASF AKTIENGESELLSCHAFT, 67056 Ludwigshafen (DE)
(72) Erfinder: Rotermund, Udo, Dr., 01990 Ortrand (DE); Heinz, Marion, 02994 Bernsdorf (DE); Biedermann, Anja, 01968 Senftenberg (DE); Hempel, Renate E., 01945 Ruhland (DE); Wiegmann, Werner, 32369 Rahdem (DE)

(56) Entgegenhaltungen:
- EP-A- 0 610 714
- DE-A- 19 545 165
- US-A- 5 451 615

## Beschreibung

Gegenstand der Erfindung sind lagerstabile FCKW-freie Emulsionen zur Herstellung von offen- und geschlossenzelligen Hartschaumstoffen auf Isocyanatbasis.

Gegenstand der Erfindung sind außerdem wasserstoffaktive Verbindungen als Emulgierhilfsmittel zur Herstellung dieser Emulsionen für die Erzeugung von offen- und geschlossenzelligen Hartschaumstoffen auf Isocyanatbasis.

Die Herstellung von Hartschaumstoffen auf lsocyanatbasis als Wärmeisolationsmaterial ist seit langem bekannt. Wichtigste chemische Ausgangsstoffe sind mehrfunktionelle lsocyanate. Als chemische Strukturen, die aus diesen Polyisocyanaten entstehen, können hier Polyurethane, Polyharnstoffe, Polyisocyanurate und auch weitere lsocyanataddukte wie Allophanate, Biurete Carbodiimide und deren lsocyanataddukte, Oxazolidone, Polyimide, Polyamide u.a. vorliegen.

Dabei wird die Art dieser Strukturen durch die Reaktionspartner der lsocyanate, die Katalyse und die Reaktionsbedingungen gesteuert. Man faßt diese lsocyanataddukte auch allgemein unter dem Begriff Polyurethane zusammen, da die Polyurethane von den Polyisocyanataddukten die wichtigste und häufigste Stoffgruppe sind. Hartschaumstoffe auf lsocyanatbasis bezeichnet man deshalb auch als Polyurethan-(PUR-) Hartschaumstoffe. Im Falle eines bedeutenden Anteils an lsocyanatstrukturen nennt man diese Schaumstoffe auch Polyurethan/Polyisocyanurat-Hartschaumstoffe, kurz PUR-PIR-Hartschaumstoffe oder auch nur PIR-Hartschaumstoffe. Die Herstellung von derart definierten Hartschaumstoffen wird beispielsweise im Kunststoff-Handbuch, Band VIl, Polyurethane, herausgegeben von G. Oertel im Carl Hanser Verlag München, Wien 1993, beschrieben.

Diese Schaumstoffe waren bisher in der Mehrzahl weitgehend geschlossenzellig. In neuerer Zeit dienen diese Hartschaumstoffe auch als Kerne für Vakuumisolationseinheiten und müssen für diesen Einsatzzweck völlig oder nahezu völlig offenzellig sein.

In EP 351 614 wird die Herstellung Iagerstabiler Emulsionen aus flüssigen, in den Polyurethan-Aufbaukomponenten schwer- oder unlöslichen perfluorierten Verbindungen als Treibmittel und daraus gefertigte offenzellige Schaumstoffe beschrieben.

In DE 4 143 148 wird die Herstellung von Hartschaumstoffen auf lsocyanatbasis mit gemeinsam in Form einer Emulsion vorliegenden lsoalkanen mit Kohlenstoffzahlen ab C6 und niedrigsiedenden fluorierten oder perfluorierten organischen Verbindungen als Treibmittelgemisch beschrieben, DE 42 00 558 beschreibt die Kombination von Fluorverbindungen mit C₄-bis C₈-Kohlenwasserstoffen einschließlich Cyclopentan. Auch DE 41 21 161 beschreibt Treibmittel enthaltende Emulsionen mit fluorierten Verbindungen.

Diese auch als "Emulsionsschäume" bezeichneten Schaumstoffe zeichnen sich durch durch sehr kleine Zellen aus, die zu niedrigen Wärmeleitfähigkeiten führen. Eine wesentliche Voraussetzung zur Herstellung dieser Emulsionen ist der Einsatz von mindestens einer oder mehreren hoch- oder perfluorierten organischen Verbindungen, vorzugsweise zusammen mit anderen Treibmitteln, z.B. den nur aus Wasserstoff und Kohlenstoff bestehenden Kohlenwasserstoffen als Treibmittelgemisch.

So kann man nach DE 42 00 558 eine Treibmittelmischung aus 5 bis 40 Gew.-% hochfluorierter und/oder perfluorierter organischer Verbindungen, insbesondere Kohlenwasserstoffen, 30 bis 95 Gew.-% Cyclopentan und 0 bis 45 Gew.-% aliphatischer und/ oder weiterer cycloaliphatischer Kohlenwasserstoffe zur Herstellung von geschlossenzelligen Polyurethanhartschaumstoffen bei Wassergehalten von 0,5 bis 3 Gew.-% einsetzen. Dadurch entsteht ein sehr feinzelliger Schaum mit einer niedrigen Wärmeleitfähigkeit.

Der Einsatz hoch- oder perfluorierter organischer Verbindungen zur Erzeugung von offenzelligen Emulsionsschäumen für die Vakuumtechnik ist weiterhin beschrieben, in EP 405 439, WO 96/25455, US 534 6 928 oder EP 662 494 oder in WO 95/15355 sowie in WO 95/15356 in Kombination mit Ruß. In JP 081 7 551 wird ein möglichst geringer Verbrauch dieser hoch- oder perfluorierten organischen Verbindungen in geschlossenzelligen Schaumstoffen gefordert.

In JP 08 104 771 wird der Einsatz von fluorhaltigen oberflächenaktiven Stoffen, beispielsweise von fluorierten Alkylestern beschrieben.

WO 95/02620 beschreibt ebenfalls die Herstellung fein- und offenzelliger Emulsionsschäume für die Vakuumtechnik, die mit Hilfe einer inerten unlöslichen organischen Flüssigkeit, die als disperse Phase einer Mikroemulsion vorhanden ist, hergestellt werden. In den Beispielen besteht diese Flüssigkeit wiederum aus hoch- oder perfluorierten Verbindungen. In EP 599 496 setzt man ebenfalls unlösliche fluorierte Verbindungen als Bestandteil einer Emulsion zu.

Auch in EP 543 536 wird eine in der Reaktionsmischung unlösliche organische Flüssigkeit zur Emulsionsbildung empfohlen Diese Flüssigkeit ist in den Beispielen wieder durch teil- oder perfluorierte Verbindungen repräsentiert. Auch in WO 93/07201 setzt man z.B. Perfluorpentan zur Emulsionsbildung ein.

Die Reihe der Schriften zum Einsatz von Fluorverbindungen für Emulsionen zur Herstellung von Hartschaumstoffen auf lsocyanatbasis zeigt aber die Bedeutung der Emulsionen und der dazu erforderlichen Fluorverbindungen zur Herstellung feinzelliger Schaumstoffe.

Obwohl das Ozonschädigunspotential (ODP=Ozone Depletion Potential) dieser Mischungen gegenüber den früher verwendeten Fluorchlorkohlenwasserstoffen FCKW auf Null gesunken ist, tragen die Fluorverbindungen noch erheblich zum TreibhauspotentiaI (GWP = Global Warming Potential) bei. Außerdem zersetzen sich nach M.C. BOGDAN et al. "Proceedings of Polyurethanes EXPO'96, SPI, Las Vegas, Nevada, pp. 394-403, die Fluorverbindungen, einmal in die Atmosphäre gelangt, in saure und umweltschädigende Zersetzungsprodukte, vor allem Fluorwasserstoff.

Analoge Überlegungen gelten auch für Treibmittel mit anderen Halogenen, die in den Hartschaumstoffen auf lsocyanatbasis zukünftig nicht mehr enthalten sein sollten.

In EP 610 714 werden hydrophobe Polyurethan-Hartschaumstoffe beschrieben, die ein Polyolgemisch aus OH-funktionellen Polyestern und OH-funktionellen oligomeren Polyolefinen enthalten.

Ein geschlossenzelliger Emulsionsschaum ohne Halogen wird in EP 394 769 beschrieben. Benutzt werden Polyesterol, ein handelsüblicher Emulgator und fein verteilter Stickstoff als Emulgierhilfsmittel.

Ein derartiger Emulsionsschaum ohne Halogen enthält selbstverständlich immer noch sehr geringe Mengen an Chlorverbindungen, die bei der Synthese des lsocyanates entstehen, aber nicht in die Atmosphäre gelangen können. Im folgenden wird ein Schaum mit diesen Spuren an Chlorverbindungen jedoch als halogenfrei betrachtet.

Ein Emulsionsschaum ohne Halogen wird beispielsweise in JP 08 193 115 beschrieben. Wesentlich ist dabei der gleichzeitige Einsatz von Polyesteralkohol und einem Prepolymer aus Isocyanat und Polyetheralkohol. In DE 432 83 83 wird ein nur teilweise gelöstes Treibmittel aus Kohlenwasserstoff, nur aus Wasserstoff und Kohlenstoff bestehend, oder Gemischen aus derartigen Kohlenwasserstoffen von 3 bis 7 C-Atomen als Emulsion in der Polyolkomponente beschrieben. Wesentlich sind dabei Polyether mit Oxyethylengruppen gemeinsam mit Polyethern, die frei von Oxyethylengruppen sind. Die Verwendung von Polyolen mit Oxyethylengruppen in Hartschaumstoff-Formulierungen erhöht jedoch bekanntermaßen die Eigenreaktivität der Formulierung, so daß zur Einstellung einer gewünschten Abbindezeit weniger Katalysator verwendet werden muß. Daraus ergibt sich der schwerwiegende Nachteil, daß die Reaktion nach Erreichen der Abbindezeit langsamer verläuft, und der Schaum wesentlich schlechter aushärtet. Das zeigt sich z.B. in unerwünscht hohen Entformzeiten bei der Formverschäumung oder in erforderlichen geringeren Arbeitsgeschwindigkeiten bei der Doppeltransportband-Technologie. Die beschriebene Lösung ist, wenn überhaupt, nur sehr begrenzt und mit diesem Nachteil behaftet einsetzbar.

In DE 410 9 076 wird ein mit Pentan und/oder iso-Pentan getriebener Polyurethan/Polyisocyanurat- (PUR/PIR) Schaum mit einem lsocyanatindex über 200 vorgestellt, bei dem als Neuheit ein halogenfreier Flammschutz der Stufe B2 nach DIN 4102 erreicht wird. Als Emulgator dienen Benzyl n-butylphthalat oder ein OH-haltiger monofunktioneller Polyether.

In US 548 8 071, US 548 4 817 und US 546 4 562 werden mit 8-24 Kohlenstoffatome enthaltenden Fettalkoholen gestartete monofunktionelle Polyoxyalkylen-Polyether als Emulgatoren und Polyester in der Polyolmischung vorgeschlagen.

In DE 441 8 993 wird der Einsatz von Verbindungen auf der Basis von Rizinusöl als Polyolkomponente in Polyurethan-Hartschaumstoffen vorgeschlagen. Das Rizinusöl wird dort mit mehrfunktionellen Alkanolen oder Aminen umgesetzt, und diese Umsetzungsprodukte dienen als alleinige Polyolkomponente. So wird beispielsweise das Veresterungsprodukt aus Ricinusöl und Glycerin mit einer Hydroxylzahl von 433 mg KOH/g beschrieben und als einziges Polyol in klaren, transparenten, nicht emulgierten A-Komponenten für Polyurethan-Hartschaumstoffe eingesetzt. Die Anwendung als EmulgierhiIfsmittel und so hergestellte Hartschaumstoffe auf Isocyanatbasis (d.h. sowohl PUR- als auch PUR/PIR-Schaumstoffe) ist in DE 441 8 993 nicht beschrieben.

Alle bisher vorgeschlagenen Emulsionen haben eine Reihe von Nachteilen:
- Beim Einsatz von Fluorverbindungen als Treibmittel ist die Treibwirkung zu gering, um offenzellige Schaumstoffe mit gutem Fließverhalten für die Vakuumtechnik herzustellen. Das einfache Ausfüllen von Hohlräumen, die dann lediglich evakuiert werden, ist damit nicht möglich.
- Halogenfreie offenzellige Schaumstoffe mit genügend kleinen Zellen für die Vakuumtechnik sind bisher überhaupt nicht herstellbar.
- Offenzellige Hartschaumstoffe, die nur mit dem aus der Reaktion zwischen Wasser und lsocyanat entstehenden CO₂ getrieben werden, sind so nicht herstellbar. Diese Schaumstoffe benötigt man beispielsweise zur Ausschäumung von Kühlschränken oder anderen lsolationseinheiten, die dann anschließend evakuiert werden. Findet das Evakuieren beispielsweise erst im Haushalt statt, kann man nur völlig umweltfreundlliche Treibgase verwenden, d.h. auch Cyclopentan oder andere Kohlenwasserstoffe sind dafür ungeeignet.
- Bisher bekannte halogenfreie Emulsionen für fein-und gleichzeitig geschlossenzellige Schaumstoffe haben eine ungenügende Lagerstabilität. Bereits nach Stunden oder spätestens nach einem bis zwei Tagen kommt es zu Entmischungserscheinungen. Die für den Einsatz der Schaumstoffe wesentliche Feinzelligkeit der Schaumstoffe ist damit eine Funktion der Lagerzeit innerhalb technisch erforderlicher Lagerzeiten von Zeitspannen unter 12 Stunden. Dadurch ist die technische Handhabung der bisher bekannten halogenfreien Emulsionen zur Herstellung von Emulsionsschäumen stark eingeschränkt. Der bisher für diesen Zweck vorgeschlagene Einsatz von monofunktionellen Emulgatoren senkt außerdem die Gesamtfunktio. nalität des Polyolgemisches stark und bewirkt eine verminderte Vernetzung mit allen damit verbundenen Nachteilen wie z.B. schlechtere Aushärtung der Reaktionsmischung oder schlechtere Temperaturstabilität des daraus hergestellten Hartschaumstoffes. Im Falle von nicht funktionellen Emulgatoren wie Benzyl-n-butyIphthalat verschlechtern sich beispielsweise die Haftung des Polyurethans an den Deckschichten und die Temperaturstabilität beträchtlich. ln geschlossenzelligen Hartschaumstoffen auf lsocyanatbasis aus halogenfreien Emulsionen ist die Wärmeleitfähigkeit wesentlich höher als aus Emulsionen mit Halogen-, vor allem Fluorverbindungen.
- Beim gemeinsamen Einsatz von halogenierten und halogenfreien Treibmitteln lassen sich auch mit PUR/PIR-Strukturen keine Schäume herstellen, die gegen sehr hohe Temperaturen stabil sind.

Die Aufgabe der Erfindung besteht darin, FCKW-freie Emulsionen zur Herstellung von offen-und geschlossenzelligen Hartschaumstoffen auf Isocyanatbasis herzustellen, die alle diese aufgezählten Nachteile nicht haben.

Die Aufgabe wird gelöst durch Emulsionen aus folgenden Bestandteilen:
a) reaktive Wasserstoffatome aufweisende Verbindungen,
b) Treibmitteln und
c) Hilfs- und Zusatzstoffen,
dadurch gekennzeichnet, dass als Treibmittel b) Wasser und niedrigsiedende cyclische und acyclische gesättigte Kohlenwasserstoffe mit bis zu 12 Kohlenstoffatomen eingesetzt werden, das Treibmittel in der Komponente emulgiert ist und als EmulgierhilfsmitteI Umsetzungsprodukte der Ricinolsäure und/oder des Rizinusöls und/oder der Tallölfettsäure mit mehrfunktionellen Alkoholen einqesetzt werden.

Als mehrfunktionelle Alkohle werden insbesondere solche mit 2 bis 6 Kohlenstoffatomen, vorzugsweise 3 bis 6 Kohlenstoffatomen und besonders bevorzugt 3 bis 5 Kohlenstoffatomen verwendet. Beispiele sind Ethylenglykol, Propylenglykol, Diethylenglykol, Dipropylenglykol, Glycerin, Butandiol. Die Hydroxylzahl der aktiven Wasserstoff aufweisenden Verbindungen gemäß Formel I ist vorzugsweise > 160 mg KOH/g.

Die erfindungsgemäß eingesetzten Emulgierhilfsmittel werden insbesondere in einer Menge von 1 bis 5 Gew.-%, vorzugsweise 5 bis 25 Gew.-%, bezogen auf die Gesamtmenge der Komponenten a) bis c), eingesetzt.

Die Herstellung derartiger Verbindungen ist beispielsweise in DE-A-44 18 993 beschrieben.

Die erfindungsgemäßen Emulsionen sind über einen Zeitraum von mehreren Wochen lagerstabil.

Zur Herstellung von feinzelligen Polyurethan-Hartschaumstoffen werden die erfindungsgemäßen, Treibmittel enthaltenden Emulsionen mit Polyisocyanaten umgesetzt. Als Isocyanate werden die üblichen und bekannten aliphatischen und insbesondere aromatischen Isocyanate eingesetzt, beispielsweise Hexamethylendiisocyanat, Isophorondiisocyanat, Toluylendiisocyanat (TDI), Diphenylmethandiisocyanat (MDI). Vorzugsweise zur Herstellung von Polyurethan-Hartschaum eingesetzt werden Gemische aus Diphenylmethandiisocyanat und Polymethylenpolyphenylpolyisocyanate, auch als Roh-MDI bezeichnet.

Die Polyisocyanate können auch modifiziert sein, beispielsweise durch Allophanat-, Biuret-, Isocyanurat- oder Oxazolidingruppen.

Die Herstellung der Polyurethane erfolgt zumeist durch Vermischung der erfindungsgemäßen Emulsionen mit den Polyisocyanaten, vorzugsweise in sogenannten Mischköpfen, und Aushärten der Reaktionsmischung in offenen oder geschlossenen Formen.

Die so hergestellten Polyurethan-Hartschäume haben sehr feine und zumeist offene Zellen. Sie können in allen Anwendungsgebieten derartiger Produkte eingesetzt werden. Besonders vorteilhaft ist ihr Einsatz als Kernmaterial für Vakuumisolationselemente.

Zu den Komponenten der erfindungsgemäßen Emulsionen ist im einzelnen folgendes zu sagen:
a) Als Verbindungen mit mindestens zwei gegenüber Isocyanaten reaktiven Wasserstoffatomen, die gemeinsam mit den erfindungsgemäß verwendeten Emulgierhiflsmitteln gemäß Formel I eingesetzt werden können, kommen Verbindungen in Frage, die zwei oder mehrere reaktive Gruppen, ausgewählt aus OH-Gruppen, SH-Gruppen, NH-Gruppen NH₂-Gruppen und CH-aciden Gruppen, wie z.B. β-Diketo-Gruppen, im Molekül tragen.
   Zweckmäßigerweise werden solche mit einer Funktionalität von 2 bis 8, vorzugsweise 2 bis 6, und einem Molekulargewicht von 300 bis 8000, vorzugsweise von 400 bis 4000 verwendet. Bewährt haben sich z.B. Polyether-polyamine und/oder vorzugsweise Polyole, ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Die Hydroxylzahl der Polyhydroxylverbindungen beträgt dabei in aller Regel 100 bis 850 und vorzugsweise 200 bis 600.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan.
   Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3, und ein Molekulargewicht von 300 bis 3000, vorzugsweise 350 bis 2000 und insbesondere 400 bis 600.
   Insbesondere als Polyole verwendet werden jedoch Polyether-polyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei-, dreiwertige und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, und Saccharose.
   Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 300 bis 8000, vorzugsweise 400 bis 1500 und insbesondere 420 bis 1100 und geeignete Polyoxytetramethylen-glykole ein Molekulargewicht bis ungefähr 3500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
   Die Verbindungen mit mindestens zwei aktiven Wasserstoffatomen (a) können auch Kettenverlängerungs- und/oder Vernetzungsmittel umfassen. Zur Modifizierung der mechanischen Eigenschaften der resultierenden Polyurethane, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge bis 20 Gew.-%, vorzugsweise von 2 bis 8 Gew.-%, bezogen auf das Gewicht der Komponente (a), zum Einsatz.
b) Als Treibmittel wird vorzugsweise Wasser eingesetzt, welches durch die Reaktion mit den Isocyanatgruppe Kohlendioxid abspaltet. Der Wassergehalt beträgt insbesondere 0,1 bis 4, vorzugsweise 0,3 bis 3, insbesondere 0,5 bis 2 Gew.-%, bezogen auf die Gesamtmasse aller wasserstoffaktiven Verbindungen. Ein zu hoher Wassergehalt kann zu einer erhöhten Sprödigkeit und Wärmeleitfähigkeit des Schaumes führen.
   Zusätzlich zu Wasser werden niedrigsiedende cyclische und acyclische gesättigte Kohlenwasserstoffe mit bis zu 12 Kohlenstoffatomen eingesetzt, die einzeln oder in beliebigen Mischungen miteinander eingesetzt werden können, insbesondere Pentane, wobei sowohl Gemische der Pentanisomeren als auch die reinen Isomeren eingesetzt werden können. Die Menge der Kohlenwasserstoffe liegt bei 1 bis 30 Gew.-Teilen, vorzugsweise 16 bis 22 Gew.-Teile, insbesondere 6 bis 12 Gew.-Teile, bezogen auf das Gewicht aller wasserstoffaktiven Verbindungen. Weiterhin ist es für bestimmte Einsatzzwecke vorteilhaft, als Co-Treibmittel Perfluorverbindungen einzusetzen. Insbesondere verwendet werden Perfluoralkane, vorzugsweise n-Perfluorpentan, n-Perfluorheptan, n-Perfluoroctan. Die Perfluorverbindungen können einzeln oder in Form von Mischungen verwendet werden. Vorzugsweise erfolgt der Einsatz in einer Menge von 0,1 bis 6 Gewichtsteilen, bezogen auf die Summe der Komponenten b) bis d).
   Da die Perfluorverbindungen in der Polyolkomponente unlöslich sind, werden sie zumeist in dieser Komponente emulgiert. Als Emulgatoren werden vorzugsweise (Meth)-acrylate eingesetzt, wobei insbesondere solche mit Fluor enthaltenden Seitenketten zur Anwendung kommen, beispielsweise fluorierte Alkylester.
c) Die erfindungsgemäßen Emulsionen enthalten weiterhin zur Herstellung der Polyurethan-Hartschaumstoffe wesentliche Komponenten, wie Katalysatoren, Hilfs- und Zusatzstoffe.
   Als Katalysatoren kommen insbesondere solche Verbindungen zur Anwendung, die die Reaktion der reaktiven Wasserstoffatome enthaltenden Verbindungen (a) mit den Polyisocyanaten stark beschleunigen. Bevorzugt hierfür sind tertiäre Amine, Zinn- und Bismutverbindungen, Alkali- und Erdalkalicarboxylate, quarternäre Ammoniumsalze, s-Hydroxytriazine und Tris-(dialkylaminomethyl)-phenole.
   Besonders bevorzugt sind tertiäre Aminoalkohole der allgemeinen Formel

   R₁R₂NR₃OH,

   wobei R₁ und R₂ aliphatische oder cycloaliphatische Gruppen mit 1 bis 15 Kohlenstoffatomen oder R₁ und R₂ zusammen einen einzigen cycloaliphatischen Ring mit 3 bis 15 Kohlenstoffatomen und dem Stickstoffatom im Ring bilden und R₃ eine aliphatische Kette mit 1 bis 15 Kohlenstoffatomen bedeuten.
   Die Kohlenstoffketten bzw. -Ringe von R₁, R₂ und R₃ können auch Heteroatome, wie Schwefel oder insbesondere Sauerstoffatome in der Kette enthalten.

Vorzugsweise bilden R₁ und R₂ unter Einschluß des Stickstoffatoms eine Piperidin-, Pyrrolidin-, Imidazol-, Morpholinstruktur, ein Alkaloid vom Pyrrolidin-Piperidin-Typ oder eine bicyclische Verbindung, z.B. ein Azanorbornan.

Beispielhaft sei genannt die Verbindung 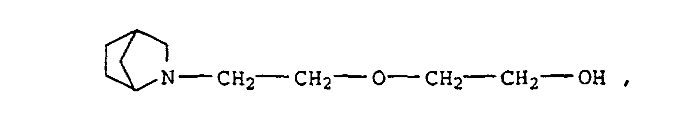 wie sie von der Firma Air Products vertrieben wird.

Zur Herstellung von Isocyanuratstrukturen im Schaumstoff benutzt man die dafür üblichen Katalysatoren wie Metallcarboxylate, beispielsweise Kaliumacetat, und andere Stoffe, wie sie beispielsweise im Kunststoff-Handbuch, Bd. VII, Polyurethane, 3. Auflage 1993, auf Seite 108, beschrieben sind.

Die Katalysatoren werden vorzugsweise in einer Menge von 0,1 bis 10 Gewichtsteilen bezogen auf 100 Gewichtsteile der Verbindungen a), b) und c).

Weitere Hilfs- und Zusatzstoffe sind beispielsweise oberflächenaktive Substanzen, Schaumstabilisatoren, Zellregler, Flammschutzmittel, Füllstoffe und Hydrolyseschutzmittel.

Nähere Angaben über oben genannte und weitere Ausgangsstoffe sind der Fachliteratur, beispielsweise der Monographie von H.J. Saunders und K.C. Frisch, "High Polymers", Band XVI, Polyurethanes Teil 1 und 2, Verlag Interscience Publishers 1962 bzw. 1964 oder dem Kunststoffhandbuch, Band VII, Polyurethane, Carl Hanser Verlag München, Wien, 1., 2. und 3. Auflage 1966, 1983 und 1993 zu entnehmen.

Der Einsatz von perfluorierten Treibmitteln wird aus Kostengründen vorzugsweise nur dann durchgeführt, wenn diese im Produktionsprozeß zurückgewonnen werden können. Das ist beispielsweise bei der Herstellung von Vakuum-Paneelen der Fall, wo der Schaum vor dem Einschweißen in eine gasdichte Umhüllung evakuiert wird.

Im Falle des alleinigen Einsatzes von Kohlenwasserstoffen als physikalische Treibmittel werden besonders stabile Dispersionen erhalten, wenn die Komponente a) Polyetheralkohole enthält, die eine Funktionalität größer 1,5, vorzugsweise 2,5 bis 3,5, und eine Hydroxylzahl von 10 bis 100 mg KOH/g, vorzugsweise 25 bis 50 mgKOH/g aufweisen. Der Einsatz dieser Polyetheralkohole erfolgt insbesondere in einer Menge von 1 bis 50 Gew.-%.

Wenn nur Wasser als Treibmittel verwendet wird, geschieht die Herstellung der Emulsionen durch einfaches Vermischen der Komponenten a) bis c).

obwohl die Emulsionen, wie beschrieben, sehr lange lagerstabil sind, kann es sich als vorteilhaft erweisen, diese erst unmittelbar vor der Verschäumung, beispielsweise im Mischkopf der Verschäummaschine, zu erzeugen.

Die erfindungsgemäßen Emulsionen erscheinen zumeist als milchigtrübe Flüssigkeiten, sie können jedoch dem bloßen Auge auch transparent erscheinen.

Die Erfindung soll an folgenden Beispielen näher erläutert werden.

Verwendete Rohstoffe:

### Polyole

### Polyol 1

Polyetheralkohol hergestellt aus 25,2 Teilen Sorbit und 74,8 Teilen Propylenoxid mit KOH als Katalysator und 0,5 Teilen Wasser als Co-Starter. Die Hydroxylzahl (OH-Zahl oder OHZ) beträgt 495 mg KOH/g, die Viskosität bei 20°C 17900 mPas. Funktionalität: 5.

### Polyol 2

Polyetheralkohol hergestellt aus Saccharose/Glycerol/Wasser und Propylenoxid, Hydroxylzahl 490 mg KOH/g, Viskosität bei 20°C 8000 mPas, Funktionalität 4,3.

### Polyol 3

Polyetheralkohol hergestellt aus Saccharose (1 Teil), Pentaerythrit (1 Teil), Diethylenglykol (2 Teile), Wasser als Co-Starter und Propylenoxid mit KOH als Katalysator, Hydroxylzahl 400 mg KOH/g. Viskosität bei 20°C 2200 mPas.

### Polyol 4

Polyetheralkohol hergestellt aus 28,0 % Gemisch aus 2,3- und 3,4-Toluylendiamin, 22,0 % Ethylenoxid und 50 % Propylenoxid mit KOH als Katalysator. Die OHZ beträgt 395 mg KOH/g, die Viskosität bei 20°C 8176 mPas.

### Polyol 5

Polyesteralkohol, hergestellt aus Adipinsäure/Phthalsäureanhydrid/Ölsäure im Verhältnis 1:2:1 mit 1,1,1 -Trimethylolpropan zu einem Zahlenmittel der Molmasse von 530 g/Mol, Hydroxylzahl 385 mg KOH/g und Viskosität bei 75°C von 1370 mPas.

### Polyol 5a

Polyesteralkohol aus Glycerin und Ricinusöl mit einer Hydroxylzahl von 500 mg KOH/g

### Polyol 5b

Polyesteralkohol aus Monoethylenglykol und Tallölfettsäure mit einer Hydroxylzahl von 161 mg KOH/g

### Polyol 5c

Polyesteralkohol aus Trimethylolpropan und Tallölfettsäure mit einer Hydroxylzahl I von 293 mg KOH/g

### Polyol 5d

Polyesteralkohol aus Glycerol und Tallölfettsäure mit einer Hydroxylzahl von 310 mg KOH/g

### Polyol 5e

Polyesteralkohol aus Glycerol und Ricinusöl mit einer Hydroxylzahl von 357 mg KOH/g

### Polyol 6

hergestellt aus Glycerol als Starter mit Propylenoxid als erster Block und Ethylenoxid als Endblock mit einer Hydroxylzahl von 35 mg KOH/g und einer Viskosität von 850 mPas bei 20°C. das Masseverhältnis von Propylenoxid beträgt 6,4

### Polyol 7

Polyetherpolyol mit einer Hydroxylzahl von 470 mg KOH/g, einem Molekulargewicht von 470 und einer Funktionalität von 3,9, hergestellt durch Umsetzung von Ethylendiamin mit Propylenoxid

### Polyol 8

Polyetherpolyol mit einer Hydroxylzahl von 490 mg KOH/g, einem Molekulargewicht von 490 und einer Funktionalität von 4,3, hergestellt durch Umsetzung einer Mischung von Saccharose, Glycerol und Wasser mit Propylenoxid

### Polyol 9

Polyetherpolyol mit einer Hydroxylzahl von 555 mg KOH/g und einer Funktionalität von 3,0, hergestellt durch Umsetzung Trimethylolpropan mit Propylenoxid

### Polyol 10

Polyetherpolyol mit einer Hydroxylzahl 400 mg KOH/g, einem Molekulargewicht von 420 und einer Funktionalität von 3,0, hergestellt durch Umsetzung von Glyzerin mit Propylenoxid

### Isocyanat 1

Polyisocyanat, Lupranat® M 20 (BASF AG), ein Gemisch aus Diphenylmethandiisocyanat und Polyphenylpolyisocyanaten mit einem NCO-Gehalt von 31,7 % und einer Viskosität von 209 mPas bei 25°C.

### Isocyanat 2

Polyisocyanat, Lupranat® M 50 (BASF AG), ein Gemisch aus Diphenylmethandiisocyanat und Polyphenylpolyisocyanaten mit einem NCO-Gehalt von 31,5 % und einer Viskosität von 550 mPas bei 25°C.

### Durchführung der Versuche

Beurteilung der Stabilität der Emulsion:
160 ml der Emulsion werden in ein Reagenzglas der Abmessungen 3,0 cm Durchmesser und 20 cm Höhe gegossen, mit einem Stopfen verschlossen und bei Raumtemperatur stehen gelassen. Beobachtet wird die Entstehung von evtl. sich abgrenzenden Phasen in Abhängigkeit von der Zeit.

### Herstellung und Prüfung der Polyurethan- bzw. Polyurethan/Polyisocyanurat-Hartschaumstoffe:

### Becherverschäumung:

A-und B-Komponente werden auf 20°C+/- 0,5K temperiert. 240 g der A-und B-Komponente werden in einem Pappbecher mit ca. 660 ml Rauminhalt 10 Sekunden mit einem Laborrührwerk der Fa. Vollrath, Durchmesser 65 mm, bei 1750 Umdrehungen/min vermischt. Das Verhältnis von A zu B entspricht dem der jeweiligen Formulierung. Die A-Komponente ist eine Vormischung der eingesetzten Polyole, Hilfsstoffe und des Treibmittels, die B-Komponente besteht aus dem Polyisocyanat. Am aufsteigenden Schaum werden Start-Steig und Abbindezeit vom ausgehärteten Schaum die Rohdichte, in den Tabellen auch als Dichte bezeichnet, in bekannter Weise gemessen. Die Feinzelligkeit wurde visuell verglichen und mit "feinzellig" (FZ) und "sehr feinzellig" (SFZ) eingeschätzt. Der Vergleich mit mikroskopischen Messungen zeigt, daß der Zelldurchmesser für "FZ" zwischen 300 µm und 400 µm, für "SFZ" kleiner 250 µm Iiegt. Besonders feinzellige (BFZ) Schaumstoffe haben Zelldurchmesser unter 180 µm.

### Herstellung von Hartschaumstoff-Formkörpern und deren Prüfung

Die Vermischung erfolgt mit einer Hochdruck-Schäummaschine PUROMAT® HD 30 der Fa. ELASTOGRAN. Andere Maschinen werden gesondert angegeben.

Das Mischungsverhältnis wird entsprechend der Rezeptur eingestellt.

### Vorwiegend geschlossenzellige Schaumstoffe:

576 g des aus dem Mischkopf austretenden Gemisches aus A-Komponente und Isocyanat werden in ein auf 45°C temperiertes Formwerkzeug der Abmessungen 300 mm x 400 mm x 80 mm (9,61-Form) gegossen, das anschließend fest verschlossen wird. Der Schaumstoff entsteht mit einer Verdichtung von 1,1 bis 2,0. Die Gesamtdichte des Formkörpers beträgt dann 60 +/- 1 kg/m³ durch Einwaage von 672 g bzw. 768 g der aufschäumenden Mischung in das gleiche Formwerkzeug eingestellt, wobei die Verdichtung zwischen 1,5 und 2 liegt. Der NCO-lndex, das molare Verhältnis von NCO zu wasserstoffaktiven Gruppen und die Abbindezeit wurden für Vergleichs- und erfindungsgemäße Beispiele konstant gehalten.

Nach einer Entformzeit von 30 min. werden nach 24 Stunden Prüfkörper aus dem Inneren des Schaumblockes herausgesägt, um die Wärmeleitfähigkeit und die Wärmeformbeständigkeit zu messen.

Die Wärmeleitfähigkeit bei Raumtemperatur wurde mit dem Gerät ANACON Modell 88 der Fa. Anacon, St. Peters Road, Maidenhead, Berkshire, England bei 23,9°C Mitteltemperatur (Gradient 37,7°C/10°C) und die Wärmeleitfähigkeit bei erhöhter Temperatur mit dem Gerät Rapid-k VT 400 der Fa. Holometrix Inc., Boston, USA, gemessen. Der Temperaturgradient kann bei dieser Messung in weiten Bereichen variiert werden und wird in den Tabellen mit angegeben.

Die Wärmeleitfähigkeit wurden 24 Stunden nach der Verschäumung (Lagerung bei Raumtemperatur) und auch nach einer diffusionsoffenen Lagerung bei 80°C über 120 Stunden gemessen.

Die Wärmeformbeständigkeit wurde bei einigen in Anlehnung an DIN 18164 an Körpern der Abmessungen 50 mm x 50 mm x 50 mm nach einer Belastung von 0,04 N/mm² über 24 Stunden als Prozent Verformung gemessen. Die Prüftemperaturen werden in den Tabellen angegeben.

In einigen Fällen der PUR/PIR-Formulierungen werden 2,5 Liter Aluminium-Druckflaschen mit 250 g des auf schäumenden Gemisches (entspricht der Gesamtdichte 100 kg/m³) gefüllt, fest verschlossen und bei 200°C über 4 Wochen, z. T. bei 220°C über 2 Wochen gelagert (Flaschentest). Der Schaumstoff wird daraufhin visuell begutachtet. Bei Handverschäumungen analog zur Becherverschäumung wurden entsprechend kleinere Al-Flaschen mit einem Volumen von 0-5 l bei einer Einwaage von 50 g verwendet.

### Weitgehend offenzellige Schaumstoffe

### Becherverschäumung:

Die Polyolkomponente A und die lsocyanatkomponente B werden auf 20°C+/- 0,5K temperiert 80 g der A- und B-Komponente werden in einem Becher mit 1100 ml Inhalt 10 Sekunden in einem Laborrührwerk der Fa. Vollrath, Durchmesser 65 mm, bei 1750 Umdrehungen/min vermischt. Am aufsteigenden Schaum werden Start-Steig- und Abbindezeit und nach Abschneiden der Kappe die freie Rohdichte bestimmt.

### Maschinenverschäumung:

Nach Vermischung von Polyol-und Isocyanat-Komponente mittels Hochdruck-Mischkopf einer Hochdruck-Schäummaschine PURONAT® SV 20 der Fa. ELASTOGRAN und nach Einbringen in eine offene Form mit den Abmaßen 700 mm x 400 mm x 90 mm nach Verschließen aufschäumen gelassen. Es können Prüfkörper ohne und mit Verdichtungen z.B. von 1,1 oder 1,2 hergestellt werden. Aus den Schaumstoffblöcken lassen sich Formkörper für die Bestimmung von Offenzelligkeit, Feinzelligkeit, Druckfestigkeit, E-Moduli, Rohdichte und Dimen-Sionsstabilität gewinnen.

Außerdem wurden aus den Schaumstoffblöcken Prüfkörper mit den Abmaßen 190 mm x 190 mm x 20 mm herausgesägt, 2 Stunden bei einer Temperatur von 110°C und gegebenenfalls niedrigem Druck vorbehandelt und anschließend in eine gasdichte Folientüte verpackt und diese nach dem Evakuieren bis zu Enddrucken von 0,05 mbar verschweißt.

In einem Gerät vom Typ "Hest-Lambda-Control-A-50" wurde nach DIN 52616 danach die Wärmeleitfähigkeit ermittelt. Die Offenzelligkeit wurde nach AST MD 28 56-87, Verfahren B an einem "Accupyc 1330" bestimmt.

In den folgenden Tabellen sind die Resultate der Verschäumungen gemäß der vorliegenden Erfindung im Vergleich mit nicht erfindungsgemäßen Beispielen ersichtlich:

### Beispiele 1 und 2

| Nummer | 1 Vergleich | 1a Vergleich | 2 Vergleich |
|---|---|---|---|
| Polyol 5 | | | 25,61 |
| Polyol 1 | 25,61 | 57,22 | |
| Polyol 6 | 31,61 | | 31,61 |
| Dipropylenglykol | 16,65 | 16,65 | 16,65 |
| Ethylenglykol | 2,72 | 2,72 | 2,72 |
| Stabilisatorgemisch | 2,56 | 2,56 | 2,56 |
| Wasser | 0,38 | 0,38 | 0,38 |
| Kaliumacetat | 2,41 | 2,41 | 2,41 |
| Tertiäres Amin | 0,26 | 0,26 | 0,26 |
| Cyclopentan | 17,80 | 17,80 | 17,80 |
| Summe | 100,00 | 100,00 | 100,00 |
| Isocyanat 1 | 300 | 300 | 300 |
| Startzeit (s) | 18 | 18 | 18 |
| Abbindezeit (s) | 29 | 29 | 29 |
| Steigzeit (s) | 43 | 43 | 43 |
| Rohdichte kg/m³ | 64,9 | 64,9 | 64,9 |
| Geschlossenzelligkeit (%) | > 90 | > 90 | > 90 |
| Stabilität Emulsion | | | |
| sofort | E | E | E |
| nach 4h | E | E | E |
| nach 1 Tag | PT | PT | E |
| nach 7 Tagen | PV | PV | E |
| nach 3 Wochen | PV | PV | E |
| nach 2 Monaten | PV | PV | E |
| Schaumstruktur | FZ | FZ | BFZ |
| E = Emulsion ohne Phasentrennung, PT = Phasentrennung, teilweise, PV = Phasentrennung, vollständig, FZ = feinzellig, SVZ = sehr feinzellig nach visueller Einschätzung. Reaktionszeiten im frisch emulgierten Zustand. | | | |

### Beispiele 3 bis 6

| Nummer | 3 Vergleich | 4 Vergleich | 5 Vergleich | 6 erfindungsgemäß |
|---|---|---|---|---|
| Polyol 5 | 31,14 | 31,14 | 31,14 | |
| Polyol 5a | | | | 31,14 |
| Polyol 6 | 38,47 | 38,47 | 38,47 | 38,47 |
| Dipropylenglykol | 20,25 | 20,25 | 20,25 | 20,25 |
| Ethylenglykol | 3,30 | 3,30 | 3,30 | 3,30 |
| Stabilis. gemisch | 3,12 | 3,12 | 3,12 | 3,12 |
| Wasser | 0,47 | 0,47 | 0,47 | 0,47 |
| Kaliumacetat | 2,93 | 2,93 | 2,93 | 2,93 |
| Tert. Amin | 0,32 | 0,32 | 0,32 | 0,32 |
| Summe | 100,00 | 100,00 | 100,00 | 100,00 |
| R11 | 56,3 | | | |
| iso-Pentan | | 17,0 | | |
| Cyclopentan | | | 17,0 | 17,0 |
| Isocyanat 1 | 390 | 390 | 390 | 390 |
| Startzeit (s) | 17 | 13 | | 18 |
| Abbindez. (s) | 39 | 39 | | 36 |
| Rohdichte kg/m³ | 51 | 52 | | 70 |
| Geschlossenzelligkeit | > 90 | > 90 | > 90 | > 90 |
| wärmeleitfähigkeit in mW/mK bei 23°C, 7 Tage | 18,4 | 19,9 | 19,9 | 20,0 |
| Stabilität Emulsion | | | | |
| sofort | E | E | E | E |
| nach 4h | E | E | E | E |
| nach 1 Tag | PT | E | E | E |
| nach 7 Tagen | PV | E | E | E |
| Schaumstruktur | FZ | FZ | BFZ | BFZ |
| Flaschentest | Schaum schwarz | Schaum hell | Schaum hell | |
| 2 Wochen, 200°C | zerstört | fest, 1 Riß | fest | |
| E = Emulsion ohne Phasentrennung, PT = Phasentrennung, teilweise, PV = Phasentrennung, vollständig, FZ = feinzellig, SVZ = sehr feinzellig nach visueller Einschätzung, Reaktionszeiten im frisch emulgierten Zustand. | | | | |

### Beispiele 7 und 8

| Nummer | 7 Vergleich | 8 Vergleich |
|---|---|---|
| Polyol 5 | 25,61 | 25,61 |
| Polyol 6 | 31,62 | 31,62 |
| Dipropylenglykol | 16,65 | 16,65 |
| Ethylenglykol | 2,71 | 2,71 |
| Stabilisatorgemisch | 2,56 | 2,56 |
| Wasser | 0,38 | 0,38 |
| Kaliumacetat | 2,41 | 2,41 |
| Tertiäres Amin | 0,26 | 0,26 |
| Cyclopentan | 17,80 | 17,80 |
| Summe | 100,00 | 100,00 |
| TEP | 0 | 11,5 |
| Isocyanat 2 | 320 | 322 |
| B 2 Test DIN 4102 | > 19 cm/B3 | 12,5 cm/B2 |
| Geschlossenzelligkeit | > 90 | > 90 |
| Stabilität Emulsion | | |
| Sofort | E | E |
| nach 4h | E | E |
| nach 1 Tag | E | E |
| nach 7 Tagen | E | E |
| E = Emulsion ohne Phasentrennung TEP = Triethylphosphat | | |

| Polyolkomponente | Beispiel (V) | Beispiel 10 (erf.) | Beispiel 11 (erf.) |
|---|---|---|---|
| Polyol 7 | 20 | 20 | 20 |
| Polyol 8 | 30 | 20 | 40 |
| Polyol 9 | 50 | 50 | 30 |
| Polyol 5a | | 10 | 10 |
| B8919 | 3 | 3 | 3 |
| B8863Z | 1 | 1 | 1 |
| FC 430 | 1 | | 1 |
| Dabco AN 20 | 5 | 5 | 5 |
| Wasser | 0,5 | 2,3 | 0,5 |
| Cyclopentan | 7 | | 7 |
| Perfluorhexan | 4 | | 4 |
| Isocyanat 1 | 144 | 145 | 147 |
| Dichte (g/l) | 55,3 | 54,7 | 55,0 |
| Offenzelligkeit (%) | 83 | 100 | 100 |
| Wärmeleitfähigkeit in mW/mK bei 0,1 mbar | 13 | 7,5 | 7,0 |
| Stabilität Emulsion | | | |
| sofort | E | | |
| nach 4h | E | E | E |
| nach 1 Tag | PT | E | E |
| nach 7 Tagen | PV | E | E |
| V = Vergleichsbeispiel, E = Emulsion ohne Phasentrennung PT = Phasentrennung, teilweise, PV = Phasentrennung, vollständig, | | | |

| Polyolkomponente | Beispiel 12 (erf.) | Beispiel 13 vergleich | Beispiel 14 (erf.) | Beispiel 15 (erf.) |
|---|---|---|---|---|
| Polyol 7 | 15 | 15 | 15 | 10 |
| Polyol 8 | 17,5 | 22,5 | 20 | 10 |
| Polyol 9 | 41 | 36 | 40 | 43 |
| Polyol 5d | 5 | | | 14 |
| Polyol 5b | | | 5 | |
| Polyol 5c | | | | |
| B8919 | 3 | 3 | 3 | 4,5 |
| B8863Z | 1 | 1 | 1 | 1,4 |
| FC 430 | 1 | 1 | 1 | |
| Dabco AN 20 | 5 | 5 | 5 | 2,8 |
| Wasser | 0,5 | 0,5 | 0,5 | 2,2 |
| Cyclopentan | 7 | 7 | 7 | |
| Perfluorhexan | 4 | 4 | 4 | |
| Isocyanat 1 | 117 | 116 | 149 | 180 |
| Dichte (g/l) | 55 | 52 | 53 | 55 |
| Offenzelligkeit (%) | 95 | 71 | 73 | 96 |
| Wärmeleitfähigkeit in mW/m*K | 7,5 | 14 | 13 | 6,9 |
| Stabilität Emulsion | | | | |
| sofort | E | E | E | E |
| nach 4h | E | E | E | E |
| nach 1 Tag | E | E | E | E |
| nach 7 Tagen | E | E | E | E |
| V = Vergleichsbeispiel, E = Emulsion ohne Phasentrennung PT = Phasentrennung, teilweise, PV = Phasentrennung, vollständig, | | | | |

| Polyolkomponente | Beispiel 16 (erf.) | Beispiel 17 (erf.) | Beispiel 18 (erf.) | Beispiel 19 (erf.) |
|---|---|---|---|---|
| Polyol 7 | 10 | 10 | 10 | 10 |
| Polyol 8 | 10 | 10 | 10 | 10 |
| Polyol 9 | 43 | 43 | 43 | 43 |
| Polyol 5e | 12 | 12 | 12 | 12 |
| Polyol 10 | 20 | 20 | 20 | 20 |
| Ortegol 501 | | 3,6 | 3,6 | |
| B 8919 | 3,6 | | | 3,6 |
| B 8870 | 1 | 0,8 | | 1,4 |
| B 8863 Z | | | 1,4 | |
| Dabco AN 20 | 3 | 3 | 3 | 3 |
| Wasser | 2,5 | 2,3 | 2,3 | 2,3 |
| Isocyanat 1 | 190 | 190 | 190 | 190 |
| Dichte (g/l) | 59 | 58 | 59 | 60 |
| Offenzelligkeit (%) | 96 | 96 | 95 | 96 |
| Wärmeleitfähigkeit in mW/m*K | 7,8 | 7,5 | 8,1 | 7,3 |
| Stabilität Emulsion | | | | |
| sofort | E | E | E | E |
| nach 4h | E | E | E | E |
| nach 1 Tag | E | E | E | E |
| nach 7 Tagen | E | E | E | E |
| V = Vergleichsbeispiel, E = Emulsion ohne Phasentrennung PT = Phasentrennung, teilweise, PV = Phasentrennung, vollständig, | | | | |

| Polyolkomponente | Beispiel 20 Vergleich | Beispiel 1 Vergleich | Beispiel 22 Vergleich |
|---|---|---|---|
| Polyol 5 | 26 | 26 | 26 |
| Polyol 6 | 32 | 32 | 32 |
| Dipropylenglykol | 17 | 17 | 17 |
| B 8461 | 1,3 | 1,3 | 1,3 |
| B 8409 | 1,3 | 1,3 | 1,3 |
| B 8919 | | 2 | |
| UAX 6164 | | | 2 |
| Wasser | 0,4 | 0,4 | 0,4 |
| Lupragen VP 9104 | 5,1 | 5,1 | 5,1 |
| Lupragen N 301 | 0,3 | 0,3 | 0,3 |
| Cyclopentan | 18 | 18 | 18 |
| Isocyanat 2 | 320 | 320 | 320 |
| Dichte (g/l) | 65 | 64 | 61 |
| Offenzelligkeit (%) | 3,2 | 95,6 | 92,4 |
| Wärmeleitfähigkeit in mW/m*K bei 0,1 mbar | 31 | 6,9 | 8,1 |
| Stabilität Emulsion | | | |
| sofort | E | E | E |
| nach 4h | E | E | E |
| nach 1 Tag | E | E | E |
| nach 7 Tagen | E | E | E |
| V = Vergleichsbeispiel, E = Emulsion ohne Phasentrennung PT = Phasentrennung, teilweise, PV = Phasentrennung, vollständig, | | | |

## Patentansprüche

1. Treibmittelhaltige Emulsionen, enthaltend
a) gegenüber Isocyanaten reaktive Wasserstoffatome enthaltende Verbindungen,
b) Treibmittel,
c) in der Polyurethanchemie übliche Katalysatoren, Hilfsmittel und/oder Zusatzstoffe, **dadurch gekennzeichnet, daß** als Treibmittel b) Wasser und niedrigsiedende cyclische und acyclische Kohlenwasserstoffe mit bis zu 12 Kohlenstoffatomen eingesetzt werden, die Treibmittel b) in den Komponenten a) und c) emulgiert vorliegen und als Emulgierhilfsmittel Umsetzungsprodukte der Ricinolsäure und/oder des Rizinusöls und/oder der Tallölfettsäure mit mehrfunktionellen Alkoholen eingesetzt werden.

2. Treibmittelhaltige Emulsionen nach Anspruch 1, **dadurch gekennzeichnet, daß** die Emulgierhilfsmittel 0,1 - 80 Gew.-% der gesamten mit Isocyanat reaktiven Verbindungen a) betragen.

3. Treibmittelhaltige Emulsionen nach einem der Ansprüche 1 oder 2, **dadurch gekennzeichnet, daß** die Emulgierhilfsmittel 5-50 Gew.-% der gesamten mit Isocyanat reaktiven Verbindungen a) betragen.

4. Treibmittelhaltige Emulsionen nach einem der Ansprüche 1 bis 3, **dadurch gekennzeichnet, daß** die Emulgierhilfsmittel 10 - 20 Gew.-% der gesamten mit Isocyanat reaktiven Verbindungen a) betragen.

5. Treibmittelhaltige Emulsionen nach einem der Ansprüche 1 bis 4, **dadurch gekennzeichnet, daß** die gegenüber Isocyanaten reaktive Wasserstoffatome aufweisenden Verbindungen a) Gemische aus Umsetzungsprodukten der Ricinolsäure und/oder des Rizinusöls und/oder der Tallölfettsäure mit mehrfunktionellen Alkoholen mit Polyolen der Funktionalität größer 1,5 und einer Hydroxylzahl von 10 mg KOH/g bis 600 mg KOH/g sind.

6. Treibmittelhaltige Emulsionen nach einem der Ansprüche 1 bis 5, **dadurch gekennzeichnet, daß** die gegenüber Isocyanaten reaktive Wasserstoffatome aufweisenden Verbindungen Gemische aus Umsetzungsprodukten der Ricinolsäure und/oder des Rizinusöls und/oder der Tallölfettsäure mit mehrfunktionellen Alkoholen und Umsetzungsprodukten aus Trimethylolpropan und Alkylenoxiden sind.

7. Verfahren zur Herstellung von geschlossen- und offenzelligen Polyurethan-Hartschaumstoffen durch Umsetzung von treibmittelhaltigen Emulsionen nach einem der Ansprüche 1 bis 6 mit Polyisocyanaten.

8. Verwendung von Umsetzungsprodukten der Ricinolsäure und/oder des Rizinusöls und/oder der Tallölfettsäure mit mehrfunktionellen Alkoholen als Emulgator für stabile, Treibmittel enthaltende Emulsionen zur Herstellung von Hartschaumstoffen auf Isocyanatbasis.

## Claims

1. A blowing agent-containing emulsion comprising
a) compounds containing hydrogen atoms which are reactive toward isocyanates,
b) blowing agents,
c) catalysts, auxiliaries and/or additives which are customary in polyurethane chemistry, wherein water and low-boiling cyclic and acyclic hydrocarbons having up to 12 carbon atoms are used as blowing agents b), the blowing agents b) are present as an emulsion in the components a and c), and reaction products of ricinoleic acid and/or castor oil and/or tall oil fatty acid with polyfunctional alcohols are used as emulsification aids.

2. A blowing agent-containing emulsion as claimed in claim 1, wherein the emulsification aids make up 0.1-80% by weight of the total compounds a) which can react with isocyanate.

3. A blowing agent-containing emulsion as claimed in either of claims 1 and 2, wherein the emulsification aids make up 5-50% by weight of the total compounds a) which can react with isocyanate.

4. A blowing agent-containing emulsion as claimed in any of claims 1 to 3, wherein the emulsification aids make up 10-20% by weight of the total compounds a) which can react with isocyanate.

5. A blowing agent-containing emulsion as claimed in any of claims 1 to 4, wherein the compounds a) containing hydrogen atoms which are reactive toward isocyanates are mixtures of reaction products of ricinoleic acid and/or castor oil and/or tall oil fatty acid with polyfunctional alcohols with polyols having a functionality of greater than 1.5 and a hydroxyl number of from 10 mg KOH/g to 600 mg KOH/g.

6. A blowing agent-containing emulsion as claimed in any of claims 1 to 5, wherein the compounds containing hydrogen atoms which are reactive toward isocyanates are mixtures of reaction products of ricinoleic acid and/or castor oil and/or tall oil fatty acid with polyfunctional alcohols and reaction products of trimethylolpropane and alkylene oxides.

7. A process for producing closed-celled and open-celled rigid polyurethane foams by reacting blowing agent-containing emulsions as claimed in any of claims 1 to 6 with polyisocyanates.

8. The use of reaction products of ricinoleic acid and/or castor oil and/or tall oil fatty acid with polyfunctional alcohols as emulsifiers for stable, blowing agent-containing emulsions for producing rigid foams based on isocyanate.

## Revendications

1. Emulsions contenant un agent gonflant, qui comprennent
a) des composés contenant des atomes d'hydrogène réactifs vis-à-vis des isocyanates,
b) un agent gonflant,
c) des catalyseurs, adjuvants et/ou additifs usuels dans la chimie des polyuréthanes, **caractérisées en ce que** comme agent gonflant b), on met en oeuvre de l'eau et des hydrocarbures cycliques et acycliques à bas point d'ébullition, comprenant jusqu'à 12 atomes de carbone, les agents gonflants b) sont émulsifiés dans les composants a) et c), et comme adjuvant émulsifiant, on utilise des produits de la réaction de l'acide ricinoléique et/ou de l'huile de ricin et/ou de l'acide gras d'huile de pin avec des alcools polyfonctionnels.

2. Emulsions contenant un agent gonflant selon la revendication 1, **caractérisées en ce que** l'adjuvant émulsifiant constitue de 0,1 à 80 % en poids de l'ensemble des composés a) réactifs vis-à-vis des isocyanates.

3. Emulsions contenant un agent gonflant selon la revendication 1 ou 2, **caractérisées en ce que** l'adjuvant émulsifiant constitue de 5 à 50 % en poids de l'ensemble des composés a) réactifs vis-à-vis des isocyanates.

4. Emulsions contenant un agent gonflant selon l'une quelconque des revendications 1 à 3, **caractérisées en ce que** l'adjuvant émulsifiant constitue de 10 à 20 % en poids de l'ensemble des composés a) réactifs vis-à-vis des isocyanates.

5. Emulsions contenant un agent gonflant selon l'une quelconque des revendications 1 à 4, **caractérisées en ce que** les composés a) contenant des atomes d'hydrogène réactifs vis-à-vis des isocyanates sont des mélanges de produits de la réaction de l'acide ricinoléique et/ou de l'huile de ricin et/ou de l'acide gras d'huile de pin avec des alcools polyfonctionnels avec des polyols dont la fonctionnalité est supérieure à 1,5 et qui présentent un indice d'hydroxyle allant de 10 mg de KOH/g à 600 mg de KOH/g.

6. Emulsions contenant un agent gonflant selon l'une quelconque des revendications 1 à 5, **caractérisées en ce que** les composés contenant des atomes d'hydrogène réactifs vis-à-vis des isocyanates sont des mélanges de produits de la réaction de l'acide ricinoléique et/ou de l'huile de ricin et/ou de l'acide gras d'huile de pin avec des alcools polyfonctionnels et des produits de la réaction du triméthylolpropane et d'oxydes d'alkylène.

7. Procédé de préparation de mousses dures de polyuréthane à cellules fermées et à cellules ouvertes, par réaction d'émulsions contenant un agent gonflant selon l'une quelconque des revendications 1 à 6 avec des polyisocyanates.

8. Utilisation de produits réactionnels de l'acide ricinoléique et/ou de l'huile de ricin et/ou de l'acide gras d'huile de pin avec des alcools polyfonctionnels en tant qu'émulsifiants pour des émulsions stables, contenant un agent gonflant, pour la préparation de mousses dures de polyuréthane à base d'isocyanate.
